(19) **Europäisches Patentamt European Patent Office Office européen des brevets**

(11) **EP 4 668 234 A1**

(12) **EUROPEAN PATENT APPLICATION**
published in accordance with Art. 153(4) EPC

(43) Date of publication:
**24.12.2025 Bulletin 2025/52**

(21) Application number: **24756198.8**

(22) Date of filing: **07.02.2024**

(51) International Patent Classification (IPC):
***G06V 20/40*** *(2022.01)*

(52) Cooperative Patent Classification (CPC):
**G06V 10/764; G06V 20/40; G06V 40/20**

(86) International application number:
**PCT/CN2024/076531**

(87) International publication number:
**WO 2024/169825 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.02.2023 CN 202310163536**

(71) Applicant: **Beijing Zitiao Network Technology Co., Ltd.**
**Beijing 100190 (CN)**

(72) Inventors:
• **LIN, Zeyi**
**Beijing 100028 (CN)**
• **ZHANG, Yang**
**Beijing 100028 (CN)**
• **FAN, Zhen**
**Beijing 100028 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **ACTION RECOGNITION METHOD AND APPARATUS, AND ELECTRONIC DEVICE, MEDIUM AND COMPUTER PROGRAM PRODUCT**

(57)     Provided in the embodiments of the present disclosure are an action recognition method and apparatus, and an electronic device, a computer-readable storage medium and a computer program product. The method comprises: in response to an action recognition request, which is triggered for a virtual terminal device, acquiring a target video, which is collected from a first-person perspective, wherein the first-person perspective is the perspective of an operator of the virtual terminal device; according to image frames in the target video, recognizing a target central point of the operator and limb key points associated with the target central point; and according to the target central point and the limb key points, determining a limb action which is conducted by the operator. In the embodiments of the present disclosure, image collection is performed from the first-person perspective, and limb recognition is then performed, so as to quickly and accurately control the virtual terminal device, thereby solving the problem of the action recognition precision of the virtual terminal device being low.

In response to an interaction control request, which is triggered for a virtual terminal device, acquire a target video, which is collected from a first-person perspective — 301

According to image frames in the target video, recognize a target center point of an operator and limb key points associated with the target center point — 302

According to the target central point and the limb key points, determine a limb action Which is conducted by the operator — 303

Fig. 3

**Description**

The present application claims priority of the Chinese Patent Application No. 202310163536.4 filed on February 16, 2023, the disclosure of which is incorporated herein by reference in its entirety as part of the present application.

TECHNICAL FIELD

Embodiments of the present disclosure relate to a movement identification method and apparatus, an electronic device, a computer-readable storage medium and a computer program product.

BACKGROUND

With the rapid development of artificial technologies, there are more and more application scenarios for device control through human-computer interaction. In common Extended Reality (XR) technologies such as Augmented Reality (AR), Virtual Reality (VR), and Mixed Reality (MR), electronic devices designed based on the extended reality technology may be called virtual terminal devices.

The virtual terminal device may be used to perform human-computer movement identification. Specifically, the virtual terminal device can acquire a video of a user in motion, identify a body movement of the user from the video, determine a control instruction of a device according to a type of the body movement, and perform a control operation corresponding to the control instruction. However, body movement identification is often performed on a video captured from a third-person perspective, which is limited in terms of application scope of body identification, and low in identification accuracy.

SUMMARY

Embodiments of the present disclosure provide a movement identification method and a movement identification apparatus, an electronic device, a computer-readable storage medium and a computer program product, to overcome the problem of low control accuracy of a virtual terminal device.

In a first aspect, an embodiment of the present disclosure provides a movement identification method, which includes:

acquiring a target video captured from a first-person perspective in response to a movement identification request triggered for a virtual terminal device, where the first-person perspective is a perspective of an operator of the virtual terminal device;

identifying a target center point of the operator and a body key point associated with the target center point according to an image frame in the target video; and

determining a body movement performed by the operator according to the target center point and the body key point.

In a second aspect, an embodiment of the present disclosure provides a movement identification apparatus, which includes an interaction response unit, an image identification unit and a movement determination unit.

The interaction response unit is configured to acquire a target video captured from a first-person perspective in response to a movement identification request triggered for a virtual terminal device, where the first-person perspective is a perspective of an operator of the virtual terminal device.

The image identification unit is configured to determine an image frame in the target video, and identify a target center point of the operator and a body key point associated with the target center point.

The movement determination unit is configured to determine a body movement performed by the operator according to the target center point and the body key point.

In a third aspect, an embodiment of the present disclosure provides an electronic device, which includes a processor and a memory.

The memory stores computer-executable instructions.

The processor executes the computer-executable instructions stored in the memory to cause the at least one processor to perform the movement identification method according to the above first aspect and various possible designs of the first aspect.

In a fourth aspect, an embodiment of the present disclosure provides a computer-readable storage medium. The computer-readable storage medium stores computer-executable instructions, and when the computer-executable instructions are executed by a processor, the processor is caused to implement the movement identification method according to the above first aspect and various possible designs of the first aspect.

In a fifth aspect, an embodiment of the present disclosure provides a computer program product including a computer program. When the computer program is executed by a processor, the processor is caused to implement the movement identification method according to the above first aspect and various possible designs of the first aspect.

BRIEF DESCRIPTION OF DRAWINGS

In order to illustrate the technical solutions of the embodiments of the present disclosure more clearly, the drawings for describing the embodiments will be briefly described below. Apparently, the drawings in the following description show some embodiments of the present disclosure, and persons of ordinary skill in the art may derive other drawings from these drawings without paying any creative effort.

Fig. 1 is a diagram of an application network architecture of a movement identification method provided by an embodiment of the present disclosure;

Fig. 2 is another diagram of an application network architecture of a movement identification method provided by an embodiment of the present disclosure;

Fig. 3 is a flowchart of a movement identification method provided by an embodiment of the present disclosure;

Fig. 4 is an example diagram of a capture scene of a third-person perspective provided by an embodiment of the present disclosure;

Fig. 5 is an example diagram of a video picture captured from a first-person perspective provided by an embodiment of the present disclosure;

Fig. 6 is a flowchart of another embodiment of a movement identification method provided by an embodiment of the present disclosure;

Fig. 7 is an example diagram of a human body architecture provided by an embodiment of the present disclosure;

Fig. 8 is an example diagram of detecting a center point and a key point provided by an embodiment of the present disclosure;

Fig. 9 is a schematic structural diagram of an embodiment of a movement identification apparatus provided by an embodiment of the present disclosure; and

Fig. 10 is a schematic diagram of a hardware structure of an electronic device provided by an embodiment of the present disclosure.

DETAILED DESCRIPTION

In order to make the objectives, technical solutions, and advantages of the embodiments of the present disclosure clearer, the technical solutions in the embodiments of the present disclosure will be described clearly and comprehensively below with reference to the drawings in the embodiments of the present disclosure. Apparently, the described embodiments are merely a part of rather than all embodiments of the present disclosure. All other embodiments obtained by persons of ordinary skill in the art based on the embodiments of the present disclosure without paying any creative effort shall fall within the protection scope of the present disclosure.

The technical solutions of the present disclosure may be applied to a scene of extended reality, where a target video is captured from a first-person perspective, and a target center point of an operator and a body key point associated with the target center point are identified from the target video, so as to implement the accurate identification of the operator's movements and improve the accuracy and efficiency of device control.

The virtual terminal device may be used to perform human-computer interaction. In the current process of human-computer movement identification, a video of a user in motion can be acquired, and a body movement of the user can be identified from the video. In the movement identification scene, video capture is performed from a third-person perspective, that is, the person faces the camera for video capture. For the video captured from the third-person perspective, the object in the video may be directly detected, and a local limb, such as a hand movement, of the detected object may be analyzed to obtain a specific body movement performed by the user. The specific body movement is mapped to a corresponding operation type or command, to implement movement identification of the device. However, the video captured from the third-person perspective cannot be applied to the related scene from the first-person perspective. When the same movement identification algorithm and operation type classification are directly adopted, the identification accuracy is not high, and the efficiency is low.

In order to solve the above technical problems, in the technical solutions of the present disclosure, for the video captured from the first-person perspective, the center point of the operator can be analyzed from the video, and the key point associated with the center point can be found according to the center point. The key point may be a position point capable of characterizing a key body part of a human body, for example, a position point of a body part such as an elbow, a shoulder, a knee, or a waist. Through the querying manner for the center point and the position point associated with the center point, the structure of the human body can be modeled more accurately, which allows the skeleton architecture of the human body to be used in the movement identification, and improves the accuracy and efficiency of device control.

In the embodiment of the present disclosure, the virtual terminal device may acquire the target video captured from the first-person perspective in response to the movement identification request triggered for the virtual terminal device. The first-person perspective may be a perspective of the operator of the virtual terminal device. The perspective of the target video is special. Therefore, for the target video, the target center point of the operator and the body key point associated with the target center point can be identified according to the image frame of the target video. The target center point may be a center point of the entire human body of the operator, for example, may be a position point of the navel. The body key point may be a key point associated with the target center point, so that the body architecture of the human body can be positioned more accurately. Therefore, the body movement performed by the operator can be determined more accurately through the target center point and the body key point. The body movement is obtained based on the target video captured from the first-person perspective, which can implement the movement identification from the first-person perspective, expand the identification scene of the body movement, and accurately identify the movement for the video from the first-person perspective, thereby improving the coverage rate and accuracy of movement identification.

The technical solutions of the present disclosure and how the technical solutions of the present disclosure solve the above technical problems will be described in detail below with specific embodiments. The following specific embodiments can be combined with each other, and the same or similar concepts or processes may not be repeated in some embodiments. The embodiments of the present invention will be described in detail below with reference to the drawings.

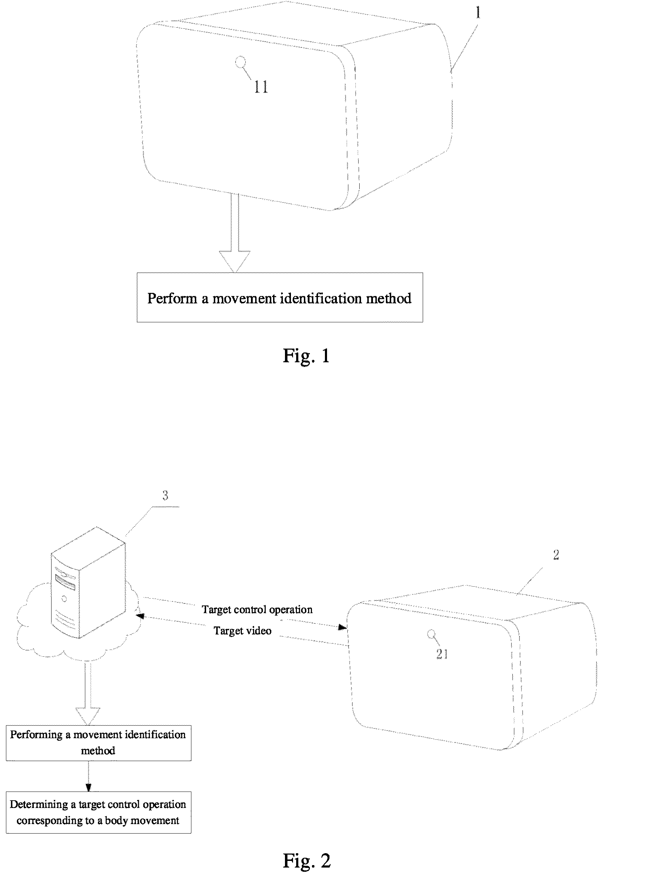

Fig. 1 is a diagram of an application network architecture of a movement identification method provided by the present disclosure. The application network architecture according to the embodiment of the present disclosure may include a virtual terminal device, and the virtual terminal device may be, for example, a VR device 1. The VR device 1 may be configured with a camera 11, and the camera 11 may capture the target video from the first-person perspective. The VR device 1 may perform the movement identification method of the present disclosure to determine the body movement performed by the operator. In addition, a corresponding target control operation may be performed on the virtual terminal device according to the virtual movement.

In a system architecture provided by an embodiment of the present disclosure, as shown in Fig. 2, the virtual terminal device 2 may establish a communication connection with the electronic device 3. The virtual terminal device 2 may be, for example, a VR device, and the virtual terminal device 2 may be configured with a camera 21, which can capture the target video from the first-person perspective. The electronic device 3 is configured with a receiving apparatus, and the receiving apparatus can receive the target video captured by the virtual terminal device 2 and execute the movement identification method of the present disclosure, to obtain the target control operation corresponding to the body movement, and feed back the target control operation to the virtual terminal device 2, so as to perform the corresponding target control operation on the virtual terminal device 2.

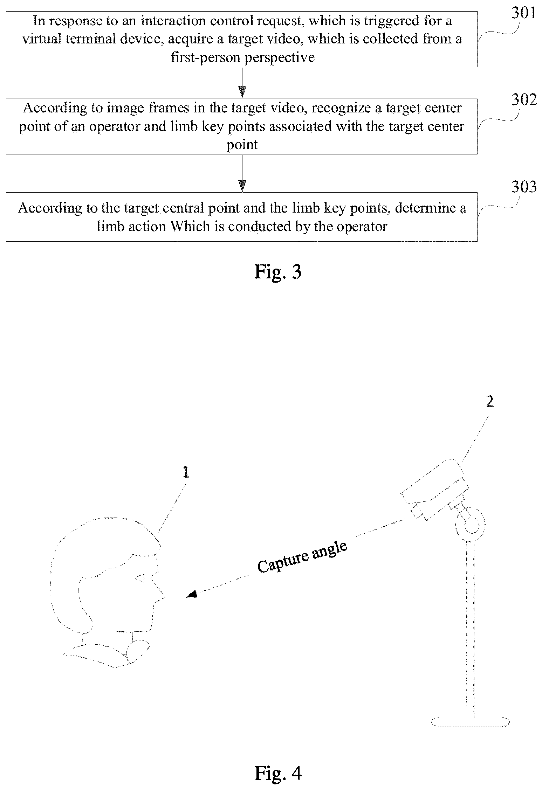

As shown in Fig. 3, which is a flowchart of an embodiment of a movement identification method provided by an embodiment of the present disclosure, the movement identification method may include the following steps.

301: acquiring a target video captured from a first-person perspective in response to a movement identification request triggered for a virtual terminal device, where the first-person perspective is a perspective of an operator of the virtual terminal device.

The movement identification request may be a device control request triggered for the virtual terminal device. The movement identification request may be triggered by the operator, for example, it is detected that the operator performs a preset start movement of movement identification, it is detected that the operator triggers a start control of movement identification, or it is detected that the operator triggers a switch of movement identification of a device such as a handle or a wristband connected to the virtual terminal device. The detection of the movement identification request can respond to the operator's control behavior in a timely and fast manner, thereby improving the control efficiency of the device.

In practical applications, for example, the video may be captured from a third-person perspective. For ease of understanding, as shown in Fig. 4, which is an example diagram of a capture scene of a third-person perspective, the user 401 may face the camera 402, and the camera 402 may capture the video of the user from the third-person perspective. The captured video picture may include information such as the face and body of the user.

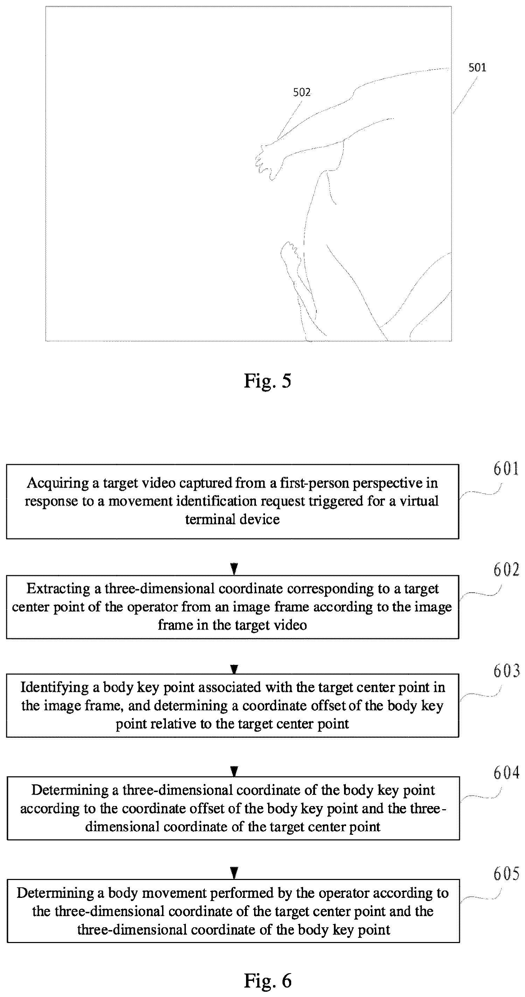

The target video is captured from the first-person perspective. For the virtual terminal device, it may be worn on a person's head. Therefore, the camera of the virtual terminal device may actually be located on the head of the human body, and video capture may be performed by simulating human eyes, that is, the target video is captured from a line of sight from top to bottom. For ease of understanding, as shown in Fig. 5, which is an example diagram of a video picture captured from a first-person perspective, the video picture 501 is a picture captured from a line of sight from top to bottom and may include an upper limb part and a lower limb part of the human body (not shown in Fig. 5). Of course, in practical applications, the movements performed by the user's hands may also be captured, which may be specifically shown as a hand 502.

The execution body of the movement identification method in the embodiment of the present disclosure may be the virtual terminal device or an electronic device connected to the virtual terminal device. The electronic device may include, for example, a cloud server, a computer, and other devices with processing functions.

302: identifying a target center point of the operator and a body key point associated with the target center point according to an image frame in the target video.

Optionally, the target video may be sampled to obtain the image frame in the target video. The sampling frequency may be set according to actual usage requirements, which will not be described in detail here.

The target center point may be a body key point that plays a central fixing role for the operator's body, and may include a center point of the operator's body, for example, a position of the navel may be used as the target center point. The target center point may also include a second center point of the operator, or a combination of the body center point and the second center point.

The body key point associated with the target center point may refer to a body key point obtained by searching for a key point through the target center point.

303: determining a body movement performed by the operator according to the target center point and the body key point.

Optionally, the Step 303 may specifically include: connecting the target center point and the body key point to obtain a movement contour, performing movement classification according to the movement contour, to obtain the body movement performed by the operator.

Optionally, after the Step 303, the method may further include: performing a target control operation corresponding to the body movement on the virtual terminal device.

Optionally, the step of performing a target control operation corresponding to the body movement on the virtual terminal device may specifically include: determining a device control command triggered by the operator according to a movement type corresponding to the body movement; and performing the target control operation on the virtual terminal device in response to the device control command.

In the embodiment of the present disclosure, the target video captured from the first-person perspective may be acquired in response to the movement identification request triggered for the virtual terminal device. The first-person perspective may be the perspective of the operator of the virtual terminal device. The perspective of the target video is special. Therefore, for the target video, the target center point of the operator and the body key point associated with the target center point can be identified according to the image frame of the target video. The target center point may be a center point of the entire human body of the operator, for example, may be a position point of the navel. The body key point can be a key point associated with the target center point, so that the body architecture of the human body can be positioned more accurately. Therefore, the body movement performed by the operator can be determined more accurately through the target center point and the body key point. The body movement is obtained based on the target video captured from the first-person perspective, which can implement the movement identification from the first-person perspective, expand the identification scene of the body movement, and accurately identify the movement for the video from the first-person perspective, thereby improving the coverage rate and accuracy of movement identification.

Further, on the basis of the above embodiment, the step of identifying a target center point of the operator and a body key point associated with the target center point according to an image frame in the target video, may include:

extracting a three-dimensional coordinate corresponding to the target center point of the operator from the image frame according to the image frame in the target video, and
identifying the body key point associated with the target center point in the image frame and determining a three-dimensional coordinate of the body key point; and
the step of determining a body movement performed by the operator according to the target center point and the body key point, may include:
determining the body movement performed by the operator according to the three-dimensional coordinate of the target center point and the three-dimensional coordinate of the body key point.

Optionally, the three-dimensional coordinate corresponding to the target center point may be a coordinate point of the target center point in a camera coordinate system. The camera coordinate system may be a three-dimensional rectangular coordinate system established by using a focus center point of a camera as an origin and using an optical axis as a Z-axis. The camera may refer to a capture device of the target video, and an intrinsic camera parameter and an extrinsic camera parameter may be the known parameters. The operator may be a user wearing the virtual terminal device.

Optionally, the step of determining the body movement performed by the operator according to the three-dimensional coordinate of the target center point and the three-dimensional coordinate of the body key point, may include: connecting the three-dimensional coordinate of the target center point and the three-dimensional coordinate of the body key point to obtain a three-dimensional movement contour, and obtaining the corresponding body movement according to the movement classification of the three-dimensional movement contour.

In the embodiment of the present disclosure, in the process of obtaining the target center point and the body key point, the three-dimensional coordinate corresponding to the target center point and the three-dimensional coordinate corresponding to the body key point can be obtained through the coordinate point identification, and the target center point and the body key point can be expressed more accurately in a more three-dimensional spatial expression form, so that the accuracy of the target center point and the body key point is higher.

Further, on the basis of any of the above embodiments, the step of determining a three-dimensional coordinate corresponding to the target center point of the operator from the image frame according to the image frame in the target video, may include:

identifying a three-dimensional coordinate corresponding to a first center point corresponding to a target object from the image frame according to the image frame in the target video;
determining a three-dimensional coordinate of a second center point according to the three-dimensional coordinate of the first center point and body information of the operator; and
determining the three-dimensional coordinate corresponding to the target center point according to the three-dimensional coordinate corresponding to the first center point and the three-dimensional coordinate corresponding to the second center point.

The first center point is a center point corresponding to the operator's body, and the second center point is a center point of the operator's neck. The first center point may be any body center point, such as a center point of the operator's waist or a position point of the navel. The second key point may be a center point of the operator's neck, for example, a midpoint corresponding to a connection line between an upper boundary of the neck and a lower boundary of the neck. Of course, in practical applications, the first center point may also be any point that can represent the center of the body, and the specific positioning of the first center point is not limited too much in this embodiment. The second center point may also be any point on the perpendicular bisector of the neck, and the specific positioning of the second center point is not limited too much in this embodiment.

Under the first-person perspective, the image of the neck and head of the operator may not be captured, thus it is difficult to identify the center point of the neck from the image frame. In order to obtain the center point of the neck, the first center point and the body information of the operator may be utilized to determine the center point of the neck, that is, the second center point. The body information of the operator may include a body contour of the operator and a classification result of the body. The body contour may be obtained by performing image processing such as body detection and edge detection on the image frame. The classification result of the body may include body parts such as upper limbs, lower limbs, and trunk obtained by classifying the body. That is, the three-dimensional coordinate of the second center point may be determined according to the three-dimensional coordinate of the first center point, the body contour of the operator, and the classification result of the body.

In addition, when a video is captured from the first-person perspective, the position of the head of the human body may be determined through pose data obtained by sensor detection. The proportional information of the human body, such as the head-to-body ratio and the ratio of upper and lower limbs, may be known. Therefore, the body information may be set to include the head position and body proportion of the operator. When the first center point is known, the second center point can be determined by combining the head position and body proportion of the operator. That is, the three-dimensional coordinate of the second center point can be determined through the three-dimensional coordinate of the first center point, in combination with the head position and body proportion of the operator. The body proportion may specifically include the proportion of the head, upper limbs, and lower limbs. Through the body proportion and in combination with the head position, the height difference of the first center point relative to the second center point can be determined, and the height of the second center point is obtained by adding the height of the first center point and the height difference. After the coordinate values of the first center point at other coordinate axes are directly assigned to the second center point, the three-dimensional coordinate of the second center point can be obtained.

In the embodiment of the present disclosure, firstly, the center point of the body, that is, the first center point, may be obtained through image prediction, and the three-dimensional coordinate of the second center point may be determined through the three-dimensional coordinate of the first center point and the body of the operator. The second center point may be the center point of the operator's neck. The detection of the center point of the neck is difficult under the first-person perspective. The center point of the neck may be predicted by using the first center point and the body, to obtain the second center point. Through the two manners, the center point of the body that can be accurately detected can be obtained through detection, and the center point of the neck that is difficult to be detected can be obtained through prediction by using the first center point, thereby improving the acquisition accuracy of the first center point and the second center point.

As shown in Fig. 6, which is a flowchart of another embodiment of a movement identification method provided by an embodiment of the present disclosure, the movement identification method may include the following steps.

601: acquiring a target video captured from a first-person perspective in response to a movement identification request triggered for a virtual terminal device, where the first-person perspective is a perspective of an operator of the virtual terminal device.

602: extracting a three-dimensional coordinate corresponding to a target center point of the operator from an image frame according to the image frame in the target video.

603: identifying a body key point associated with the target center point in the image frame, and determining a coordinate offset of the body key point relative to the target center point.

In practical applications, the target center point may include one or more. When the target center point includes one, the coordinate offset of each body key point relative to the target center point can be determined.

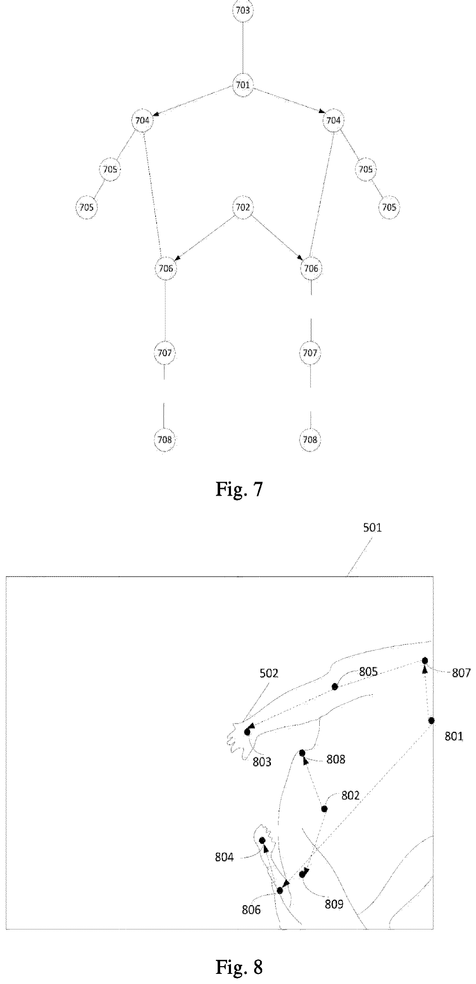

Optionally, the coordinate offset may be a position difference between the position of the body key point and the position of the target center point in the camera coordinate system. In the process of determining the body key point, starting from the target center point, the body key point associated with the target center point and the coordinate offset of the body key point relative to the target center point may be obtained by referring to the body architecture. The body architecture may be a connection structure formed by key body points of the human body. For ease of understanding, as shown in Fig. 7, which is an example diagram of a human body architecture, the human body architecture may include a target center point consisting of a second center point 701 and a first center point 702, and the body points connected to the second center point may include a head body point 703, a shoulder body point 704, an elbow and hand body point 705. The body points associated with the first center point may include a waist body point 706, a knee body point 707 and a foot body point 708.

Optionally, the Step 603 may include: identifying a key point in the image frame, matching the identified key point with a body point in the body architecture according to the body architecture and the target center point, to obtain the body key point associated with the target center point. After the body key point corresponding to the body architecture is obtained through the body key point positioning manner, the coordinate offset of the body key point relative to the target center point associated with the body key point may also be determined.

604: determining a three-dimensional coordinate of the body key point according to the coordinate offset of the body key point and the three-dimensional coordinate of the target center point.

Taking the neck key point as an example, assuming that the three-dimensional coordinate of the neck key point is (x,y,z), and the offset of the body key point relative to the target center point obtained by learning from the feature is (dx,dy,dz), the three-dimensional coordinate of the body key point can be determined to be expressed as (x+dx,y+dy,z+dz).

605: determining a body movement performed by the operator according to the three-dimensional coordinate of the target center point and the three-dimensional coordinate of the body key point.

In the embodiment of the present disclosure, the target video captured from the first-person perspective can be obtained in response to the movement identification request triggered for the virtual terminal device. According to the image frame of the target video, the three-dimensional coordinate corresponding to the target center point of the operator can be extracted from the image frame, so that the target center point can be extracted accurately. After the target center point is obtained, the body key point associated with the target center point in the image frame can be identified, and the coordinate offset of the body key point relative to the target center point can be determined. The difference between the target center point and the body key point can be accurately expressed through the coordinate offset, and then the three-dimensional coordinate of the body key point can be accurately calculated through the coordinate offset of the body key point and the three-dimensional coordinate of the target center point, so as to implement the accurate acquisition of the coordinate point of the body key point. Furthermore, the body movement performed by the operator is determined through the three-dimensional coordinate of the target center point and the three-dimensional coordinate of the body key point, so as to obtain the body movement with higher identification accuracy.

Further, on the basis of any of the above embodiments, the step of identifying the body key point associated with the target center point in the image frame, and determining a coordinate offset of the body key point relative to the target center point, may include:
performing key point detection on an image feature by using a key point detection algorithm, to obtain the body key point associated with the target center point, and calculating the coordinate offset of the body key point relative to the target center point.

Optionally, the landmark detection algorithm may include a heatmap-based landmark detection algorithm and a regression-based landmark detection algorithm, and the specific type of the landmark detection algorithm is not limited too much in this embodiment. Through the heatmap-based landmark detection algorithm, the body key point associated with the target center point can be detected, and the coordinate offset of the body key point relative to the target center point can be obtained. The coordinate offset may be an offset corresponding to a three-dimensional coordinate system.

In the embodiment of the present disclosure, the key point can be accurately extracted from the image feature through the landmark detection algorithm, and then the body key point associated with the target center point can be obtained from the key point, and the coordinate offset of the body key point relative to the target center point can be calculated. Through the landmark detection algorithm, the key point can be detected quickly and accurately.

Further, on the basis of any of the above embodiments, the target center point includes the first center point and the second center point; and the body key point includes an upper limb body key point and a lower limb body key point.

The step of determining a coordinate offset of the body key point relative to the target center point, includes:

determining a coordinate offset of the upper limb body key point relative to the second center point; and

determining a coordinate offset of the lower limb body key point relative to the first center point.

Optionally, the upper limb body key point may include: a head body point, a shoulder body point, an elbow and a hand body point. The lower limb body key point may include: a waist body point, a knee body point and a foot body point. The head body point may be a center point of the head or a position point of the top of the head. The shoulder key point may be any key point of the shoulder part, which may include two key points on both sides of the body. The elbow and hand key point may include an elbow key point and a hand key point. The waist body point may include a position point corresponding to a connection between the waist and the thigh, the knee key point may be a knee position point of two legs, and the foot body point may be any point on the ankle or foot. In the present embodiment, only for the purpose of explaining the key points of each body part, the specific position of the point is not limited too much.

For ease of understanding, taking the video picture 501 captured from the first-person perspective in the above embodiment as an example, as shown in Fig. 8, which is an example diagram of detecting an center point and an key point, the target center point in the video picture 501 captured from the first-person perspective may be a second center point 801 and a first center point 802, and the upper limb key points that are obtained by detection may include: hand key points 803 and 804, elbow key points 805 and 806, a shoulder key point 807, and hip key points 808 and 809. Through an offset, each key point can be established a relationship with the corresponding center point, and the relationship is shown by a dotted line in Fig. 8.

In the embodiment of the present disclosure, by determining the association relationship between the first center point and the upper limb key point and the association relationship between the second center point and the lower limb key point, and using the respective target center points to associate the two different body areas of the upper and lower limbs, the association between the target center point and the body key point can be closer, which is beneficial to improve the accuracy of the key point, and then obtain a more accurate body movement.

Further, optionally, the step of determining a three-dimensional coordinate of the body key point according to the coordinate offset of the body key point and the three-dimensional coordinate of the target center point, includes:

adding the three-dimensional coordinate of the second center point and the coordinate offset of the upper limb body key point relative to the second center point, to obtain a three-dimensional coordinate of the upper limb body key point; and

adding the three-dimensional coordinate of the first center point and the coordinate offset of the lower limb body key point relative to the first center point, to obtain a three-dimensional coordinate of the lower limb body key point.

In this embodiment, the coordinate calculation of the body key point is implemented by adding the three-dimensional coordinate point of the center point and the coordinate offset, so that the accurate three-dimensional coordinates of the body key points of the upper and lower limbs are obtained, and the accuracy and precision of the three-dimensional coordinates of the body key point are improved.

Further, on the basis of any of the above embodiments, the step of extracting a three-dimensional coordinate corresponding to the target center point of the operator from the image frame, may include:

extracting an image feature of the image frame by using a deep learning network obtained through training; and inputting the image feature into a center point identification algorithm, to detect and obtain the target center point of the operator and determine the three-dimensional coordinate corresponding to the target center point.

Optionally, the center point identification algorithm may include a heatmap algorithm, a target detection algorithm, and the like. The center point of the operator in the image feature and the three-dimensional coordinate corresponding to the center point can be identified through the center point identification algorithm.

In the embodiment of the present disclosure, the image feature of the image frame can be extracted by using the deep learning network to extract the image feature, and the image feature can record key feature information in the image frame. The center point identification can be performed through the image feature, to obtain the target center point and the three-dimensional coordinate of the target center point, thereby improving the acquisition efficiency and accuracy of the target center point.

Further, on the basis of any of the above embodiments, the step of inputting the image feature into a center point identification algorithm, to detect and obtain the target center point of the operator and determine the three-dimensional coordinate corresponding to the target center point, may include:

identifying the target center point in the image feature and a pixel coordinate corresponding to the target center point in the image frame according to a heatmap algorithm;

inputting the image feature and the target center point into a depth regression algorithm to calculate and obtain a depth value of the target center point; and

determining the three-dimensional coordinate of the target center point according to the pixel coordinate of the target center point and the depth value.

Optionally, the heatmap algorithm can perform heat analysis on the image feature, and identify the target center point and the pixel coordinate of the target center point through the heat analysis. The depth regression algorithm can calculate the depth value of the target center point, to obtain the depth value of the target center point.

The depth value of the target center point may be a distance from the camera to each point in the scene, that is, a distance from the camera to a pixel point.

In the embodiment of the present disclosure, the target center point in the image feature and the pixel coordinate of the target center point in the image frame can be identified through the heatmap algorithm, and the feature analysis can be performed on the image feature through the heatmap algorithm, to obtain the target center point and the pixel coordinate corresponding to the target center point in the image frame. Then, the depth of the target center point can be calculated through the depth regression algorithm, to obtain the depth of the target center point. Furthermore, the coordinate system conversion can be performed on the center point through the pixel coordinate and the depth value, to obtain the three-dimensional coordinate of the target center point, thereby obtaining an accurate three-dimensional coordinate.

Further, optionally, the step of identifying the target center point in the image feature and a pixel coordinate corresponding to the target center point in the image frame according to a heatmap algorithm, includes:

inputting the image feature into the heatmap algorithm, to calculate and obtain a Gaussian heatmap corresponding to the target key point in the image frame; and

performing coordinate calculation on the Gaussian heatmap of the target key point, to obtain the pixel coordinate corresponding to the target center point in the image frame.

Optionally, the heatmap algorithm can be used to perform feature analysis on the image feature, to obtain key points and Gaussian heatmaps of channels corresponding to the key points. The pixel coordinate can be obtained by performing a function (argmax) for finding the independent variable maximum on the Gaussian heatmaps of the respective key points.

In the embodiment of the present disclosure, the heatmap analysis can be performed on the input image feature through the heatmap algorithm to obtain the heatmap corresponding to the target key point, and then the pixel coordinate of the target center point is calculated and obtained by using the heatmap of the target key point, thereby improving the acquisition efficiency and accuracy of the pixel coordinate.

Further, on the basis of any of the above embodiments, the step of determining the three-dimensional coordinate of the target center point according to the pixel coordinate of the target center point and the depth value, includes: performing camera coordinate system calculation according to the pixel coordinate of the target center point and the depth value and in combination with an intrinsic camera parameter, to obtain the three-dimensional coordinate of the target center point corresponding to the camera coordinate system.

For ease of understanding, the calculation manner of the three-dimensional coordinate will be described in detail below. It is assumed that the pixel point in the image coordinate system of the image can be expressed as: $(p_x, p_y)$, and the pixel point in the pixel coordinate system can be expressed as $(u, v)$.

Assuming that the three-dimensional coordinate is expressed as **X**=(X, Y, Z), the three-dimensional coordinate is expressed in the form of a homogeneous coordinate:

$$\begin{pmatrix} X \\ Y \\ Z \\ 1 \end{pmatrix} \rightarrow \begin{pmatrix} fX + Zp_x \\ fy + Z p_y \\ Z \end{pmatrix} = \begin{bmatrix} f & 0 & p_x & 0 \\ 0 & f & p_y & 0 \\ 0 & 0 & 1 & 0 \end{bmatrix} \begin{pmatrix} X \\ Y \\ Z \\ 1 \end{pmatrix} = \begin{bmatrix} f & 0 & p_x \\ 0 & f & p_y \\ 0 & 1 & 0 \end{bmatrix} \begin{bmatrix} 1 & 0 & 0 & 0 \\ 0 & 1 & 0 & 0 \\ 0 & 0 & 1 & 0 \end{bmatrix} \begin{pmatrix} X \\ Y \\ Z \\ 1 \end{pmatrix} = \begin{pmatrix} u \\ v \\ 1 \end{pmatrix}.$$

It is assumed that the intrinsic camera parameter is expressed as:

$$K = \begin{bmatrix} f & 0 & p_x \\ 0 & f & p_y \\ 0 & 1 & 0 \end{bmatrix},$$

That is, $\begin{pmatrix} u \\ v \\ 1 \end{pmatrix} = \text{KP}\mathbf{X} = \text{K}[\text{I}|0]\mathbf{X}$. The $f$ is a conversion parameter from the image coordinate system to the pixel coordinate system.

Through the above formula, the intrinsic camera parameter and the pixel coordinate are substituted into the calculation to obtain the three-dimensional coordinate $\mathbf{X}$.

In the embodiment of the present disclosure, the position point calculation of the camera coordinate system may be performed according to the pixel coordinate and the depth value of the target center point and in combination with the intrinsic camera parameter, to obtain the three-dimensional coordinate of the target center point corresponding to the camera coordinate system. Through the coordinate system calculation, an accurate three-dimensional coordinate can be obtained, and the accuracy and efficiency of the three-dimensional coordinate are improved.

Further, on the basis of any of the above embodiments, before the step of acquiring the target video captured from the first-person perspective, the method further includes:

capturing the target video from the first-person perspective through a fisheye lens arranged on a head of the operator.

Optionally, the fisheye lens on the head of the operator may be located on the virtual terminal device, and the fisheye lens is configured on the virtual terminal device may capture the target video with the operator's line of sight. The virtual terminal device may acquire the target video captured by the fisheye lens. In practical applications, the virtual terminal device may be configured with a receiving apparatus for receiving the target video captured by the fisheye lens.

In the embodiment of the present disclosure, the target video is captured by the fisheye lens located on the head of the operator, that is, the content browsing behavior from the first-person perspective is simulated by the fisheye lens, to obtain the target video captured from the first-person perspective, so that the picture in the target video can accurately simulate the viewing angle from the first-person perspective, and the obtained target video has a higher association degree and accuracy with the required first-person perspective.

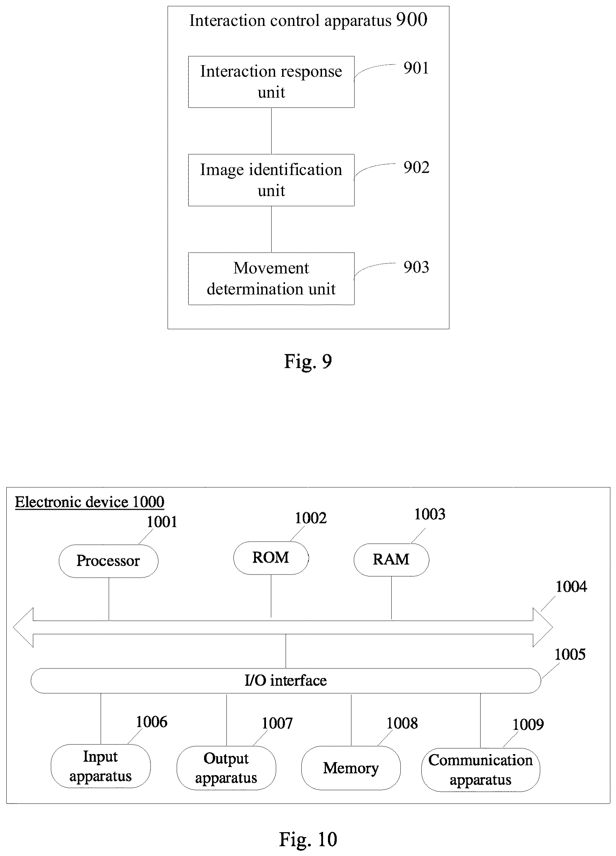

As shown in Fig. 9, which is a schematic structural diagram of an embodiment of a movement identification apparatus provided by an embodiment of the present disclosure, the movement identification apparatus 900 may include the following units.

An interaction response unit 901 is configured to acquire a target video captured from a first-person perspective in response to a movement identification request triggered for a virtual terminal device, where the first-person perspective is a perspective of an operator of the virtual terminal device.

An image identification unit 902 is configured to determine an image frame in the target video, and identify a target center point of the operator and a body key point associated with the target center point.

A movement determination unit 903 is configured to determine a body movement performed by the operator according to the target center point and the body key point.

Optionally, the apparatus may further include a device control operation unit.

The device control operation unit is configured to perform a target control operation corresponding to the body movement on the virtual terminal device.

Further, on the basis of any of the above embodiments, the image identification unit includes a target determination module and a body determination module.

The target determination module is configured to extract a three-dimensional coordinate corresponding to a target center point of the operator from the image frame according to the image frame in the target video.

The body determination module is configured to identify a body key point associated with the target center point in the image frame and determine a three-dimensional coordinate of the body key point.

The movement determination unit includes a movement identification module.

The movement identification module is configured to determine a body movement performed by the operator according to the three-dimensional coordinate of the target center point and the three-dimensional coordinate of the body key point.

Further, on the basis of any of the above embodiments, the target determination module may include a coordinate detection sub-module, a coordinate prediction sub-module and a coordinate determination sub-module.

The coordinate detection sub-module is configured to identify a three-dimensional coordinate corresponding to a first center point corresponding to a target object from the image frame according to the image frame in the target video.

The coordinate prediction sub-module is configured to determine a three-dimensional coordinate of a second center point according to the three-dimensional coordinate of the first center point and body information of the operator.

The coordinate determination sub-module is configured to determine the three-dimensional coordinate corresponding to the target center point according to the three-dimensional coordinate corresponding to the first center point and the three-dimensional coordinate corresponding to the second center point.

Further, on the basis of any of the above embodiments, the body determination module includes an offset determination sub-module and a coordinate calculation sub-module.

The offset determination sub-module is configured to identify the body key point associated with the target center point in the image frame, and determine a coordinate offset of the body key point relative to the target center point.

The coordinate calculation sub-module is configured to determine the three-dimensional coordinate of the body key point according to the coordinate offset of the body key point and the three-dimensional coordinate of the target center point.

Further, on the basis of any of the above embodiments, the offset determination sub-module is further configured to:

perform key point detection on an image feature by using a key point detection algorithm, to obtain the body key point associated with the target center point, and calculate the coordinate offset of the body key point relative to the target center point.

Further, on the basis of any of the above embodiments, the target center point includes the first center point and the second center point; and the body key point includes an upper limb body key point and a lower limb body key point.

The offset determination sub-module is further configured to:

determine a coordinate offset of the upper limb body key point relative to the second center point; and

determine a coordinate offset of the lower limb body key point relative to the first center point.

Further, on the basis of any of the above embodiments, the coordinate calculation sub-module is further configured to:

add the three-dimensional coordinate of the second center point and the coordinate offset of the upper limb body key point relative to the second center point, to obtain a three-dimensional coordinate of the upper limb body key point; and add the three-dimensional coordinate of the first center point and the coordinate offset of the lower limb body key point relative to the first center point, to obtain a three-dimensional coordinate of the lower limb body key point.

Further, on the basis of any of the above embodiments, the target determination module includes a feature extraction sub-module and a target detection sub-module.

The feature extraction sub-module is configured to extract an image feature of the image frame by using a deep learning network obtained through training.

The target detection sub-module is configured to input the image feature into a center point identification algorithm, to detect and obtain the target center point of the operator and determine the three-dimensional coordinate corresponding to the target center point.

Further, on the basis of any of the above embodiments, the target detection sub-module is further configured to:

identify the target center point in the image feature and a pixel coordinate corresponding to the target center point in the image frame according to a heatmap algorithm;
input the image feature and the target center point into a depth regression algorithm to calculate and obtain a depth value of the target center point; and
determine the three-dimensional coordinate of the target center point according to the pixel coordinate of the target center point and the depth value.

Further, on the basis of any of the above embodiments, the target detection sub-module is further configured to:

input the image feature into the heatmap algorithm, to calculate and obtain a Gaussian heatmap corresponding to the target key point in the image frame; and
perform coordinate calculation on the Gaussian heatmap of the target key point, to obtain the pixel coordinate corresponding to the target center point in the image frame.

Further, on the basis of any of the above embodiments, the target detection sub-module is further configured to: perform camera coordinate system calculation according to the pixel coordinate of the target center point and the depth value and in combination with an intrinsic camera parameter, to obtain the three-dimensional coordinate of the target center point corresponding to the camera coordinate system.

Further, on the basis of any of the above embodiments, the apparatus further includes a video capture unit.

The video capture unit is configured to capture the target video from the first-person perspective through a fisheye lens arranged on a head of the operator.

The apparatus provided in the embodiment can be configured to perform the technical solutions of the above method embodiments, and the implementation principles and technical effects thereof are similar, which will not be repeated here in the embodiment.

In order to implement the above embodiments, an embodiment of the present disclosure further provides an electronic device, which includes a processor and a memory. The memory stores computer-executable instructions.

The processor executes the computer-executable instructions stored in the memory, to cause the processor to perform the movement identification method according to any of the above embodiments.

The device provided in an embodiment can be configured to perform the technical solutions of the above method embodiments, and the implementation principles and technical effects thereof are similar, which will not be repeated here in the embodiment.

Referring to Fig. 10, which illustrates a schematic structural diagram of an electronic device 1000 suitable for implementing the embodiments of the present disclosure, the electronic device 1000 may be a terminal device or a server. The terminal device may include, but is not limited to, mobile terminals such as a mobile phone, a laptop, a digital broadcast receiver, a personal digital assistant (abbreviated as PDA), a tablet computer, a portable media player (abbreviated as PMP), a vehicle-mounted terminal (such as a vehicle navigation terminal), and fixed terminals such as a digital TV and a desktop computer. The electronic device shown in Fig. 10 is only an example, and should not bring any limitation to the function and usage scope of the embodiments of the present disclosure.

As shown in Fig. 10, the electronic device 1000 may include a processor (such as a central processing unit and a graphics processor) 1001, which may perform various appropriate movements and processing according to a program stored in a read-only memory (abbreviated as ROM) 1002 or a program loaded from a memory 1008 into a random access memory (abbreviated as RAM) 1003. The RAM 1003 further stores various programs and data required for the operation of the electronic device 1000. The processor 1001, the ROM 1002, and the RAM 1003 are connected to each other through a bus 1004. An input/output (I/O) interface 1005 is also connected to the bus 1004.

Generally, the following apparatus may be connected to the I/O interface 1005: an input apparatus 1006 including, for example, a touchscreen, a touchpad, a keyboard, a mouse, a camera, a microphone, an accelerometer, a gyroscope, etc.; an output apparatus 1007 including, for example, a liquid crystal display (abbreviated as LCD), a speaker, a vibrator, etc.; the memory 1008 including, for example, a magnetic tape, a hard disk, etc.; and a communication apparatus 1009. The communication apparatus 1009 may allow the electronic device 1000 to perform wireless or wired communication with other devices to exchange data. Although Fig. 10 shows the electronic device 1000 having various apparatus, it should be understood that it is not required to implement or have all of the illustrated apparatus. Alternatively, more or fewer apparatus may be implemented or provided.

In particular, according to the embodiments of the present disclosure, the processes described above with reference to the flowcharts may be implemented as a computer software program. For example, an embodiment of the present disclosure includes a computer program product, which includes a computer program carried on a computer-readable medium, and the computer program includes program codes for executing the method shown in the flowcharts. In such an embodiment, the computer program may be downloaded and installed from the network through the communication apparatus 1009, or installed from the memory 1008, or installed from the ROM 1002. When the computer program is executed by the processor 1001, the above functions defined in the methods of the embodiments of the present disclosure are executed.

It should be noted that the above computer-readable medium in the present disclosure may be a computer-readable signal medium or a computer-readable storage medium, or any combination thereof. The computer-readable storage medium may be, for example, but not limited to, an electrical, magnetic, optical, electromagnetic, infrared, or semiconductor system, apparatus or device, or any combination thereof. More specific examples of the computer-readable storage medium may include, but are not limited to, an electrical connection with one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program, and the program may be used by or in combination with an instruction execution system, apparatus, or device. In the present disclosure, the computer-readable signal medium may include a data signal propagated in a baseband or as a part of a carrier wave, in which computer-readable program codes are carried. Such propagated data signal may take a variety of forms, including but not limited to an electromagnetic signal, an optical signal, or any suitable combination thereof. The computer-readable signal medium may also be any computer-readable medium other than the computer-readable storage medium. The computer-readable signal medium may send, propagate, or transmit a program used by or in combination with an instruction execution system, apparatus, or device. The program codes contained on the computer-readable medium may be transmitted by any suitable medium, including but not limited to an electric wire, an optical cable, radio frequency (RF), or any suitable combination thereof.

An embodiment of the present disclosure further provides a computer-readable storage medium having computer-executable instructions stored therein, where the computer-executable instructions, when executed by a processor, cause the processor to implement the movement identification method according to any of the above embodiments.

An embodiment of the present disclosure further provides a computer program product, including a computer program, where the computer program, when executed by a processor, causes the processor to implement the movement identification method according to any of the above embodiments.

The above computer-readable medium may be included in the above electronic device, or may exist alone without being assembled into the electronic device.

The above computer-readable medium carries one or more programs, and when the above one or more programs are executed by the electronic device, the electronic device is caused to execute the method shown in the above embodiments.

The computer program codes for performing the operations of the present disclosure may be written in one or more programming languages or a combination thereof. The above programming languages include object-oriented programming languages, such as Java, Smalltalk, C++, and also include conventional procedural programming languages, such as "C" language or similar programming languages. The program codes may be executed entirely on a user's computer, partly on a user's computer, as an independent software package, partly on a user's computer and partly on a remote computer, or entirely on a remote computer or server. In the case of a remote computer, the remote computer can be connected to the user's computer through any kind of network, including a local area network (abbreviated as LAN) or a wide area network (abbreviated as WAN), or can be connected to an external computer (for example, connected through the Internet using an Internet service provider).

The flowcharts and block diagrams in the drawings illustrate the architecture, functionality, and operation of possible implementations of systems, methods and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The units involved in the embodiments described in the present disclosure may be implemented in software or hardware. The name of a unit does not constitute a limitation of the unit itself under certain circumstances. For example, a first acquiring unit may also be described as "a unit for acquiring at least two Internet Protocol addresses".

The functions described herein above may be performed, at least in part, by one or more hardware logic components. For example, without limitation, available exemplary types of hardware logic components include: a field-programmable gate array (FPGA), an application-specific integrated circuit (ASIC), an application-specific standard product (ASSP), a system on a chip (SOC), a complex programmable logical device (CPLD), etc.

In the context of the present disclosure, a machine-readable medium may be a tangible medium that may include or store a program for use by or in combination with an instruction execution system, apparatus, or device. The machine-readable medium may be a machine-readable signal medium or a machine-readable storage medium. The machine-readable medium may include, but is not limited to, an electrical, magnetic, optical, electromagnetic, infrared, or semiconductor system, apparatus, or device, or any suitable combination of the foregoing. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing.

In a first aspect, according to one or more embodiments of the present disclosure, a movement identification method is provided and includes:

acquiring a target video captured from a first-person perspective in response to a movement identification request triggered for a virtual terminal device, where the first-person perspective is a perspective of an operator of the virtual terminal device;
identifying a target center point of the operator and a body key point associated with the target center point according to an image frame in the target video; and
determining a body movement performed by the operator according to the target center point and the body key point.

According to one or more embodiments of the present disclosure, the identifying a target center point of the operator and a body key point associated with the target center point according to an image frame in the target video, includes:

extracting a three-dimensional coordinate corresponding to the target center point of the operator from the image frame according to the image frame in the target video, and
identifying the body key point associated with the target center point in the image frame and determining a three-dimensional coordinate of the body key point; and
the determining a body movement performed by the operator according to the target center point and the body key point, includes:
determining the body movement performed by the operator according to the three-dimensional coordinate of the target center point and the three-dimensional coordinate of the body key point.

According to one or more embodiments of the present disclosure, the determining a three-dimensional coordinate corresponding to the target center point of the operator from the image frame according to the image frame in the target video, includes:

identifying a three-dimensional coordinate corresponding to a first center point corresponding to a target object from the image frame according to the image frame in the target video;
determining a three-dimensional coordinate of a second center point according to the three-dimensional coordinate of the first center point and body information of the operator; and
determining the three-dimensional coordinate corresponding to the target center point based on the three-dimensional coordinate corresponding to the first center point and the three-dimensional coordinate corresponding to the second center point.

According to one or more embodiments of the present disclosure, the identifying the body key point associated with the target center point in the image frame and determining a three-dimensional coordinate of the body key point, includes:

identifying the body key point associated with the target center point in the image frame, and determining a coordinate offset of the body key point relative to the target center point; and
determining the three-dimensional coordinate of the body key point according to the coordinate offset of the body key point and the three-dimensional coordinate of the target center point.

According to one or more embodiments of the present disclosure, the identifying the body key point associated with the target center point in the image frame and determining a coordinate offset of the body key point relative to the target center point, includes:
performing key point detection on an image feature by using a key point detection algorithm, to obtain the body key point associated with the target center point, and calculating the coordinate offset of the body key point relative to the target center point.
According to one or more embodiments of the present disclosure, the target center point includes the first center point and the second center point; and the body key point includes an upper limb body key point and a lower limb body key point;
the determining the coordinate offset of the body key point relative to the target center point, includes:

determining a coordinate offset of the upper limb body key point relative to the second center point; and

determining a coordinate offset of the lower limb body key point relative to the first center point.

According to one or more embodiments of the present disclosure, the determining the three-dimensional coordinate of the body key point according to the coordinate offset of the body key point and the three-dimensional coordinate of the target center point, includes:

adding the three-dimensional coordinate of the second center point and the coordinate offset of the upper limb body key point relative to the second center point, to obtain a three-dimensional coordinate of the upper limb body key point; and
adding the three-dimensional coordinate of the first center point and the coordinate offset of the lower limb body key point relative to the first center point, to obtain a three-dimensional coordinate of the lower limb body key point.

According to one or more embodiments of the present disclosure, the extracting a three-dimensional coordinate corresponding to the target center point of the operator from the image frame, includes:

extracting an image feature of the image frame by using a deep learning network obtained through training; and

inputting the image feature into a center point identification algorithm, to detect and obtain the target center point of the operator and determine the three-dimensional coordinate corresponding to the target center point.

According to one or more embodiments of the present disclosure, the inputting the image feature into a center point identification algorithm to detect and obtain the target center point of the operator and determine the three-dimensional coordinate corresponding to the target center point, includes:

identifying the target center point in the image feature and a pixel coordinate corresponding to the target center point in the image frame according to a heatmap algorithm;
inputting the image feature and the target center point into a depth regression algorithm to calculate and obtain a depth value of the target center point; and
determining the three-dimensional coordinate of the target center point according to the pixel coordinate of the target center point and the depth value.

According to one or more embodiments of the present disclosure, the identifying the target center point in the image feature and a pixel coordinate corresponding to the target center point in the image frame according to a heatmap algorithm, includes:

inputting the image feature into the heatmap algorithm, to calculate and obtain a Gaussian heatmap corresponding to the target key point in the image frame; and
performing coordinate calculation on the Gaussian heatmap of the target key point, to obtain the pixel coordinate corresponding to the target center point in the image frame.

According to one or more embodiments of the present disclosure, the determining the three-dimensional coordinate of the target center point according to the pixel coordinate of the target center point and the depth value, includes:
performing camera coordinate system calculation according to the pixel coordinate of the target center point and the depth value and in combination with an intrinsic camera parameter, to obtain the three-dimensional coordinate of the target center point corresponding to the camera coordinate system.
According to one or more embodiments of the present disclosure, before the acquiring a target video captured from a first-person perspective, the method further includes:
capturing the target video from the first-person perspective through a fisheye lens arranged on a head of the operator.
In a second aspect, according to one or more embodiments of the present disclosure, a movement identification apparatus is provided and includes an interaction response unit, an image identification unit and a movement determination unit.
The interaction response unit is configured to acquire a target video captured from a first-person perspective in response to a movement identification request triggered for a virtual terminal device, where the first-person perspective is a perspective of an operator of the virtual terminal device.
The image identification unit is configured to determine an image frame in the target video, and identify a target center point of the operator and a body key point associated with the target center point.
The movement determination unit is configured to determine a body movement performed by the operator according to the target center point and the body key point.
In a third aspect, according to one or more embodiments of the present disclosure, an electronic device is provided and includes at least one processor and a memory.
The memory stores computer-executable instructions.
The at least one processor executes the computer-executable instructions stored in the memory to cause the at least one processor to perform the movement identification method according to the above first aspect and various possible designs of the first aspect.
In a fourth aspect, according to one or more embodiments of the present disclosure, a computer-readable storage medium is provided. The computer-readable storage medium stores computer-executable instructions, and when the computer-executable instructions are executed by a processor, the processor is caused to implement the movement identification method according to the above first aspect and various possible designs of the first aspect.
In a fifth aspect, according to one or more embodiments of the present disclosure, a computer program product is provided, and includes a computer program. When the computer program is executed by a processor, the processor is caused to implement the movement identification method according to the above first aspect and various possible designs of the first aspect.
The above description is only preferred embodiments of the present disclosure and an illustration of the technical principles employed. Those skilled in the art should understand that the disclosure scope involved in the present disclosure is not limited to the technical solutions formed by the specific combination of the above technical features, and should also cover other technical solutions formed by any combination of the above technical features or their equivalents without departing from the above disclosed concept. For example, a technical solution formed by replacing the above features with the technical features disclosed in the present disclosure (but not limited to) having similar functions.

In addition, although operations are depicted in a particular order, this should not be understood as requiring that such operations be performed in the specific order shown or in a sequential order. Under certain circumstances, multitasking and parallel processing may be advantageous. Similarly, although the above discussion contains several specific implementation details, these should not be construed as limiting the scope of the present disclosure. Certain features that are described in the context of separate embodiments may also be implemented in combination in a single embodiment. Conversely, various features described in the context of a single embodiment may also be implemented in multiple embodiments separately or in any suitable sub-combination.

Although the subject matter has been described in language specific to structural features and/or logical movements of the method, it should be understood that the subject matter defined in the appended claims is not necessarily limited to the specific features or movements described above. Rather, the specific features and movements described above are merely exemplary forms of implementing the claims.

## Claims

1. A movement identification method, comprising:

    acquiring a target video captured from a first-person perspective in response to a movement identification request triggered for a virtual terminal device, wherein the first-person perspective is a perspective of an operator of the virtual terminal device;
    identifying a target center point of the operator and a body key point associated with the target center point according to an image frame in the target video; and
    determining a body movement performed by the operator according to the target center point and the body key point.

2. The method according to claim **1,** wherein the identifying a target center point of the operator and a body key point associated with the target center point according to an image frame in the target video, comprises:

    determining a three-dimensional coordinate corresponding to the target center point of the operator from the image frame according to the image frame in the target video, and
    identifying the body key point associated with the target center point in the image frame and determining a three-dimensional coordinate of the body key point; and
    wherein the determining a body movement performed by the operator according to the target center point and the body key point, comprises:
    determining the body movement performed by the operator according to the three-dimensional coordinate of the target center point and the three-dimensional coordinate of the body key point.

3. The method according to claim 2, wherein the determining a three-dimensional coordinate corresponding to the target center point of the operator from the image frame according to the image frame in the target video, comprises:

    identifying a three-dimensional coordinate corresponding to a first center point corresponding to a target object from the image frame according to the image frame in the target video;
    determining a three-dimensional coordinate of a second center point according to the three-dimensional coordinate of the first center point and body information of the operator; and
    determining the three-dimensional coordinate corresponding to the target center point according to the three-dimensional coordinate corresponding to the first center point and the three-dimensional coordinate corresponding to the second center point.

4. The method according to claim 3, wherein the identifying the body key point associated with the target center point in the image frame and determining a three-dimensional coordinate of the body key point, comprises:

    identifying the body key point associated with the target center point in the image frame, and determining a coordinate offset of the body key point relative to the target center point; and
    determining the three-dimensional coordinate of the body key point according to the coordinate offset of the body key point and the three-dimensional coordinate of the target center point.

5. The method according to claim 4, wherein the identifying the body key point associated with the target center point in the image frame, and determining a coordinate offset of the body key point relative to the target center point, comprises:
performing key point detection on an image feature by using a key point detection algorithm, to obtain the body key point associated with the target center point, and calculating the coordinate offset of the body key point relative to the target center point.

6. The method according to any one of claims 3 to 5, wherein the target center point comprises the first center point and the second center point; the body key point comprises an upper limb body key point and a lower limb body key point; wherein the determining a coordinate offset of the body key point relative to the target center point, comprises:

   determining a coordinate offset of the upper limb body key point relative to the second center point; and
   determining a coordinate offset of the lower limb body key point relative to the first center point.

7. The method according to claim 6, wherein the determining the three-dimensional coordinate of the body key point according to the coordinate offset of the body key point and the three-dimensional coordinate of the target center point, comprises:

   adding the three-dimensional coordinate of the second center point and the coordinate offset of the upper limb body key point relative to the second center point, to obtain a three-dimensional coordinate of the upper limb body key point; and
   adding the three-dimensional coordinate of the first center point and the coordinate offset of the lower limb body key point relative to the first center point, to obtain a three-dimensional coordinate of the lower limb body key point.

8. The method according to claim 2, wherein the determining a three-dimensional coordinate corresponding to the target center point of the operator from the image frame, comprises:

   extracting an image feature of the image frame by using a deep learning network obtained through training; and
   inputting the image feature into a center point identification algorithm, to detect and obtain the target center point of the operator and determine the three-dimensional coordinate corresponding to the target center point.

9. The method according to claim 8, wherein the inputting the image feature into a center point identification algorithm, to detect and obtain the target center point of the operator and determine the three-dimensional coordinate corresponding to the target center point, comprises:

   identifying the target center point in the image feature and a pixel coordinate corresponding to the target center point in the image frame according to a heatmap algorithm;
   inputting the image feature and the target center point into a depth regression algorithm to calculate and obtain a depth value of the target center point; and
   determining the three-dimensional coordinate of the target center point according to the pixel coordinate of the target center point and the depth value.

10. The method according to claim 9, wherein the identifying the target center point in the image feature and a pixel coordinate corresponding to the target center point in the image frame according to a heatmap algorithm, comprises:

    inputting the image feature into the heatmap algorithm to calculate and obtain a Gaussian heatmap corresponding to the target key point in the image frame; and
    performing coordinate calculation on the Gaussian heatmap of the target key point, to obtain the pixel coordinate corresponding to the target center point in the image frame.

11. The method according to claim 8, wherein the determining the three-dimensional coordinate of the target center point according to the pixel coordinate of the target center point and the depth value, comprises:
performing camera coordinate system calculation according to the pixel coordinate of the target center point and the depth value and in combination with an intrinsic camera parameter, to obtain the three-dimensional coordinate of the target center point corresponding to the camera coordinate system.

12. The method according to any one of claims 1 to 11, wherein before the acquiring a target video captured from a first-person perspective, the method further comprises:
capturing the target video from the first-person perspective through a fisheye lens arranged on a head of the operator.

13. A movement identification apparatus, comprising:

an interaction response unit, configured to acquire a target video captured from a first-person perspective in response to a movement identification request triggered for a virtual terminal device, wherein the first-person perspective is a perspective of an operator of the virtual terminal device;
an image identification unit, configured to determine an image frame in the target video, and identify a target center point of the operator and a body key point associated with the target center point; and
a movement determination unit, configured to determine a body movement performed by the operator according to the target center point and the body key point.

14. An electronic device, comprising: a processor and a memory;

wherein the memory stores computer-executable instructions; and
the processor executes the computer-executable instructions stored in the memory to cause the processor to perform the movement identification method according to any one of claims 1 to 12.

15. A computer-readable storage medium, wherein the computer-readable storage medium stores computer-executable instructions, and when the computer-executable instructions are executed by a processor, the processor is caused to implement the movement identification method according to any one of claims 1 to 12.

16. A computer program product, comprising a computer program, wherein the computer program is executed by a processor to implement the movement identification method according to any one of claims 1 to 12.

Perform a movement identification method

Fig. 1

Target control operation

Target video

Performing a movement identification method

Determining a target control operation corresponding to a body movement

Fig. 2

In response to an interaction control request, which is triggered for a virtual terminal device, acquire a target video, which is collected from a first-person perspective

301

According to image frames in the target video, recognize a target center point of an operator and limb key points associated with the target center point

302

According to the target central point and the limb key points, determine a limb action Which is conducted by the operator

303

Fig. 3

1

2

Capture angle

Fig. 4

501

502

Fig. 5

Acquiring a target video captured from a first-person perspective in response to a movement identification request triggered for a virtual terminal device
601

Extracting a three-dimensional coordinate corresponding to a target center point of the operator from an image frame according to the image frame in the target video
602

Identifying a body key point associated with the target center point in the image frame, and determining a coordinate offset of the body key point relative to the target center point
603

Determining a three-dimensional coordinate of the body key point according to the coordinate offset of the body key point and the three-dimensional coordinate of the target center point
604

Determining a body movement performed by the operator according to the three-dimensional coordinate of the target center point and the three-dimensional coordinate of the body key point
605

Fig. 6

Fig. 7

Fig. 8

Interaction control apparatus 900

Interaction response unit — 901

Image identification unit — 902

Movement determination unit — 903

Fig. 9

Electronic device 1000

Processor — 1001

ROM — 1002

RAM — 1003

1004

1005

I/O interface

Input apparatus — 1006

Output apparatus — 1007

Memory — 1008

Communication apparatus — 1009

Fig. 10

## INTERNATIONAL SEARCH REPORT

| International application No. |
|---|
| **PCT/CN2024/076531** |

**A.    CLASSIFICATION OF SUBJECT MATTER**

G06V 20/40(2022.01)i

According to International Patent Classification (IPC) or to both national classification and IPC

**B.    FIELDS SEARCHED**

Minimum documentation searched (classification system followed by classification symbols)

IPC:G06V

Documentation searched other than minimum documentation to the extent that such documents are included in the fields searched

Electronic data base consulted during the international search (name of data base and, where practicable, search terms used)

VEN, CNTXT, WOTXT, EPTXT, USTXT, CNKI, IEEE: 本人, 第一, 动作, 目标中心, 视角, 视线中心, 视野, 视野中心, 手势, 指令, 主, 主体, 姿势, eyeshot, gesture, scope, vision, action?, field of view

**C.    DOCUMENTS CONSIDERED TO BE RELEVANT**

| Category* | Citation of document, with indication, where appropriate, of the relevant passages | Relevant to claim No. |
|---|---|---|
| X | WO 2020071144 A1 (SONY CORP.) 09 April 2020 (2020-04-09)<br>description, paragraphs [0030]-[0137] | 1-16 |
| A | CN 112507799 A (HUANXIE TECHNOLOGY (WUHAN) CO., LTD.) 16 March 2021 (2021-03-16)<br>entire document | 1-16 |
| A | CN 113628239 A (BAIDU ONLINE NETWORK TECHNOLOGY (BEIJING) CO., LTD.) 09 November 2021 (2021-11-09)<br>entire document | 1-16 |
| A | CN 106924970 A (NETEASE (HANGZHOU) NETWORK CO., LTD.) 07 July 2017 (2017-07-07)<br>entire document | 1-16 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 April 2024** | **07 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/076531** |

| Patent document cited in search report | | | Publication date (day/month/year) | Patent family member(s) | Publication date (day/month/year) |
| --- | --- | --- | --- | --- | --- |
| WO | 2020071144 | A1 | 09 April 2020 | None | |
| CN | 112507799 | A | 16 March 2021 | None | |
| CN | 113628239 | A | 09 November 2021 | None | |
| CN | 106924970 | A | 07 July 2017 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310163536